# EUROPEAN PATENT SPECIFICATION

(11) **EP 1 576 992 B1**
(45) Date of publication and mention of the grant of the patent: **19.08.2009**
(21) Application number: 04700516.0
(22) Date of filing: 07.01.2004
(51) Int. Cl.: A63F 13/06, G09B 9/00

(54) **GAME DEVICE, GAME METHOD, PROGRAM, AND INFORMATION RECORDING MEDIUM**
SPIELVORRICHTUNG, SPIELVERFAHREN, PROGRAMM UND INFORMATIONSAUFZEICHNUNGSMEDIUM
DISPOSITIF DE JEU, PROCÉDÉ DE JEU, PROGRAMME ET SUPPORT D'ENREGISTREMENT D'INFORMATIONS

(30) Priority: 10.01.2003 JP 2003004998
(43) Date of publication of application: 21.09.2005
(73) Proprietor: Konami Digital Entertainment Co., Ltd., Tokyo 107-8324 (JP)
(72) Inventor: ITO, Yutaka, Konami Computer Entert. Studios Inc, Minato-ku, Tokyo 106-6113 (JP); AKITA, Manabu, Konami Computer Entert. Studios Inc, Minato-ku, Tokyo 106-6113 (JP)
(74) Representative: Rüger, Barthelt & Abel Patentanwälte
(86) International application number: PCT/JP2004/000025
(87) International publication number: WO 2004/062755

(56) References cited:
- JP-A- 7 124 332
- JP-A- 7 271 289
- US-A- 5 116 051
- US-A- 5 618 178

## Description

### Technical Field

The present invention relates to a game device that uses information of a pedal position and a pedaling pressure to control the pedaling pressure, a game method, and a program that causes a computer to execute these.

### Background Art

Conventionally, a racing game is provided where a player drives a car as a car driver, moves the car in the virtually set world, and enjoys competition with another player and a player controlled by a computer.

In such a racing game, the player operates a handle shape controller to decide a direction where the car moves, and operates an accelerator shape or brake shape controller to output instructions of acceleration and deceleration of the car, and operates a shift lever shape controller to adjust a virtual gear ratio of the car.

In such the racing game, the brake shape controller was configured such that the player pressed it by foot. Such a configuration was made where when the player pressed the pedal of the controller, the player felt the pedaling pressure by the repulsive force of a plate spring, an air spring, a coil spring and the like and when the player pressed the pedal to a predetermined position, a switch was turned on to output a signal indicating that the brake was applied.

On the other hand, in the actual car, the pedaling pressure obtained when the driver presses the pedal changes depending on the condition of the road surface, the state of the car, and the pedal pressing position, and the driver can know the condition of the road surface and the state of the car by the change. When driving the actual car, the driver can feel an inertial force applied to the driver's body to know whether the car is rapidly accelerated.

Accordingly, such a technique is demanded where the pedaling pressure is changed by the progress of the game and the current pedal position, thereby making it possible to inform the player of the condition of the road surface, the state of the car, and the condition of the acceleration of the car. Particularly, since a real time property is required in the game, computation necessary for controlling such a pedal must be executed as fast as possible.

The present invention has been made to solve the aforementioned problem, and an object of the present invention is to provide a game device that uses information of a pedal position and a pedaling pressure to control the repulsive force, a game method, and a program that causes a computer to execute these.

For an example of the prior art see JP-A- 07 271289

### Disclosure of Invention

In order to achieve the above object, the following invention is disclosed according to the principle of the present invention.

A game device according to a first aspect of the present invention comprises a connecting section, a storing section, an obtaining section, and a control section and is configured as follows.

First of all, the connecting section allows communicable connection to "a controller that transmits status information designating a current pedal position and pedaling pressure and receives instructing information." Particularly, a repulsive force of a pedal can be desirably designated as the instructing information. Moreover, the controller to be connected to the connecting section is desirably a controller that imitates a real brake pedal. However, the controller to be connected is not limited to the controller that imitates the brake pedal and general game controllers may be possible if they transmits status information corresponding to "the pedal position and the pedaling pressure" and receives instructing information that designates information corresponding to "the repulsive force of the pedal" and the like. Moreover, the other computer that is connected via a network may function as a controller if it can transmit and receive the aforementioned information.

While, the storing section prestores time change information of the pedal position and the pedaling pressure to be associated with a game condition. For example, as the game condition, when the present invention is applied to a racing game, it can be considered that various kinds of events that can occur in the actual car such as a current frictional coefficient of a road surface in the visual world, unevenness thereon, a type of car, acceleration, speed, and the like are reflected in the virtual world. As time change information, information of how the position and pressure of the brake pedal of the actual car in the relevant state change with time may be obtained in advance and this may be suitably edited for a game.

Moreover, the obtaining section obtains the prestored time change information to be associated with a current game condition. Namely, the obtaining section monitors the progress of the game to check on the current game condition, and obtains time change information suitable for the current game condition. The acquisition is desirably executed in real time. The time change information includes multiple pairs of elapsed time since the time when the state of the relevant game was started and the pedal position and pedaling pressure corresponding to the elapsed time.

Then, the control section generates instructing information from the pedal position and pedaling pressure designated as the obtained time change information and the current pedal position and pedaling pressure designated as the status information received from the controller to be connected, and transmits the instructing information to the controller via the connecting section.

Particularly, force to be provided to the pedal is calculated to reduce a difference between each of the pedal position and pedaling pressure designated as the obtained time change information and each of the current pedal position and pedaling pressure designated as the status information received from the controller to be connected, and instructing information that designates the calculated force as a repulsive force of the pedal is transmitted to the controller via the connecting section.

Namely, if a change is made in the exactly same way as the time change information where the pedal position and the pedaling pressure are obtained in advance, the player can feel "the pedal position and pedaling pressure of the actual car", but actually the player's operation causes a disturbance to generate a difference between the time change information and the pedal action of the actual controller. The control section calculates the repulsive force to be applied to the pedal to reduce the difference as much as possible.

In this way, when the controller, which is a controller that imitates the brake shape and which can control the repulsive force to the pedal while obtaining the change in the pedal position and the pedaling pressure using a sensor, is connected to the game device of the present invention, the repulsive force is changed to control the controller along the change in the predetermined pedal position and pedaling pressure as much as possible. In this case, the player can obtain the operational feeling of the real brake.

Moreover, the game device of the present invention further comprises a braking section and a displaying section, and can be configured as follows. Namely, the present invention is one of the preferred embodiments of the aforementioned embodiment, and controls acceleration and deceleration of an object moving in the virtual world by the controller connected to the external section.

Here, the storing section prestores "a pedal position and/or a pedaling pressure" and braking force information of braking force at this time to be associated with the game condition. On the other hand, the obtaining section further obtains the braking force information prestored to be associated with the current game condition. Even in the real world, effectiveness of the brake also changes by the condition of the road surface, the state of the car, the amount of brake pressing and the pedaling pressure. "The condition of the road surface and the state of the car" correspond to the game condition, "the pedal position and/or the pedaling pressure" correspond to the amount of brake pressing and the pedaling pressure" and "braking force" corresponds to "effectiveness of the brake", respectively.

Moreover, the braking section obtains braking force designated to be associated with the current pedal position and/or pedaling force designated as the status information from the obtained braking force information, and calculates acceleration of an object moving in a virtual world from the braking force. Since acceleration by the braking force is acceleration corresponding to "effectiveness of the brake", this works in a direction where acceleration calculated by other method is reduced in general. Furthermore, this acceleration is time integrated to make it possible to obtain speed of the object and this speed is time integrated to make it possible to obtain the position of the object.

Then, the displaying section moves the object in the virtual world by the calculated acceleration, and displays the object on the screen by the moved position. For example, when movement of the object in the virtual world is one in a two dimensional manner, the state of the entire virtual world is displayed and thereafter the object is displayed at the position of the object obtained by the aforementioned time integration, thereby making it possible to view the state of movement of the object.

While, in the present invention, the displaying section may be configured such that the virtual world where the position of the moved object is used as the point of view is display on the screen. In this case, a three-dimensional graphics image where the virtual world formed of various kinds of polygons is seen from the object is displayed on the screen. For example, in the case of the application to the racing game, this can provide the player such an impression as if the player drove the car and viewed the outside world from the inside of the car.

Furthermore, the game device of the present invention can further comprise an inertial section. Here, when magnitude of the calculated acceleration exceeds a predetermined threshold value, the inertial section obtains an inertial force preset to be associated with the acceleration, and when the inertial force is obtained, the control section designates a sum of the calculated force and the obtained inertial force as a repulsive force of the pedal.

When it is assumed that a racing game is given as an example, a case in which acceleration of the car exceeds the predetermined threshold value corresponds to a case of hard acceleration and hard stopping. In such a case, the driver feels an inertial force and receives such an impact that the driver is thrown forward the car and such an impact that the driver's back is pushed against the seat. The inertial section calculates an inertial force corresponding to such impacts and the control section adds the inertial force to the repulsive force of the pedal.

According to the present invention, for example, in the racing game, a rapid change in acceleration of the car such as hard acceleration and hard stopping is reflected in the repulsive force of the pedal, thereby making it possible to inform the player of the state of the car such as hard acceleration and hard stopping to cause the player to feel a real sense of driving.

A game method according to another aspect of the present invention comprises a receiving step, an obtaining step, a controlling step, and a transmitting step to perform communication with a controller, and is configured as follows. Namely, in the receiving step, one that is status information transmitted from the controller and designates a current pedal position and pedaling pressure is received. On the other hand, in the obtaining step, one that is time change information prestored to be associated with a current game condition and designates the pedal position and pedaling pressure is obtained. The acquisition is desirably executed in real time.

Moreover, in the controlling step, instructing information is generated from the pedal position and pedaling pressure designated as the obtained time change information and the current pedal position and pedaling pressure designated as the status information received from the controller. Particularly, force is generated to reduce a difference between each of the pedal position and pedaling pressure designated as the obtained time change information and each of the current pedal position and pedaling pressure designated as the status information received from the controller to be connected, and instructing information that designates the calculated force as a repulsive force of the pedal is generated. Then, in the transmitting step, generated instructing information is transmitted to the controller.

A program according to another aspect of the present invention causes a computer having a connecting section that allows communicable connection to "a controller that transmits status information designating a current pedal position and pedaling pressure and receives instructing information" to function as the game device or causes the computer to execute the game method.

Moreover, the program of the present invention can be recorded on a computer-readable information recording medium such as a compact disc, a flexible disc, a hard disc, magneto-optical disc, a digital video disc, a magnetic tape, a semiconductor memory, and the like. The aforementioned program can be distributed and sold via a computer network independently of the computer that executes the program. Furthermore, the aforementioned recording medium can be distributed and sold independently of the computer.

### Brief Description of Drawings

FIG. 1 is a schematic view illustrating a general configuration of a typical information processing apparatus that implements a game device according to an embodiment of the present invention;
FIG 2 is a schematic view illustrating one general configuration of a brake-type controller connectable to a game device of the present embodiment;
FIG. 3 is an explanatory view illustrating a general configuration relating to the function of each section of a game device according to the present embodiment;
FIG 4 is a flowchart illustrating the processing flow of a game method executed by a game device according to the present embodiment;
FIG 5 is a schematic view illustrating the state in which time change information of a pedal position and pedaling pressure in the condition of a certain game is stored in a storing section;
FIG 6 is an explanatory view illustrating the state of braking force information stored in a storing section; and
FIG 7 is an explanatory view illustrating one example of a screen display of a racing game.

### Best Mode for Carrying Out the Invention

The following will explain an embodiment of the present invention. In order to facilitate the understanding, the following will explain the embodiment in which the present invention is applied to an information processing apparatus dedicated to a game, but the present invention can be applied to information processing apparatuses such as various type of computers, PDA (Personal Data Assistants), cellular phones, and the like. In other words, the embodiment described below is intended to illustrate the present invention, not to limit the scope of the present invention. Accordingly, though embodiments in which the respective components or all components are replaced with those equivalent to these components can be adopted by one skilled in the art, these embodiments are included in the scope of the present invention.

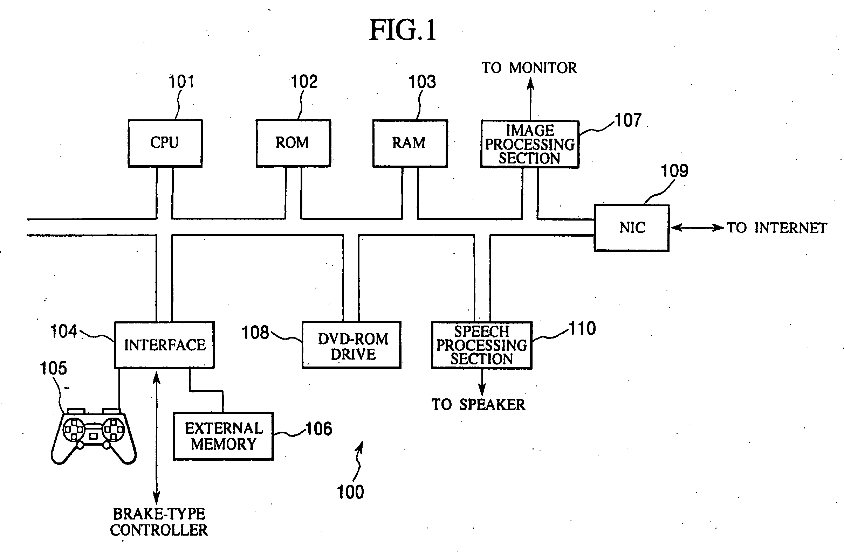

FIG. 1 is a schematic view illustrating a general configuration of a typical information processing apparatus that implements a game device according to one of embodiments of the present invention. The following explanation will be given with reference to this figure.

An information processing apparatus 100 includes a CPU (Central Processing Unit) 101, a ROM (Read Only Memory) 102, a RAM (Random Access Memory) 103, an interface 104, a controller 105, an external memory 106, an image processing section 107, a DVD (Digital Versatile Disk) - ROM drive 108, and an NIC (Network Interface Card) 109.

A DVD-ROM in which a game program and data are stored is attached to the DVD-ROM drive 108 and power of the information processing apparatus 100 is turned on, so that the program is executed and the game device of the present embodiment is implemented.

The CPU 101 controls the entire operation of the information processing apparatus 100 and is connected to the respective configuration components to exchange a control signal and data therebetween. The CPU 101 obtains data from the respective configuration components, processes the relevant data by various kinds of computations, and transmits it to the respective configuration components as data or a control signal. In the CPU 101, data of various kinds is once stored in a cache provided in the CPU 101, and is further obtained by a register provided in the CPU 101, and thereafter various kinds of computations are executed.

On the ROM 102, an IPL (Initial Program Loader), which is executed immediately after power is turned on, is recorded, and this is executed, thereby the program recorded on the DVD-Rom is read onto the RAM 103 and started to be executed by the CPU 101. Moreover, on the ROM 102, a program of an operating system necessary for controlling the entire operation of the information processing apparatus 100 and various kinds of data are recorded.

The RAM 103 is one that temporarily stores data and the program, and holds the program and data read from the DVD-ROM and data necessary for the progress of other game and communications. In addition, various kinds of information transmitted from various types of equipment, such as a brake-type controller to be described later, connected to the information processing apparatus 100 and various kinds of information to be transmitted to the various types of equipment are temporarily stored therein.

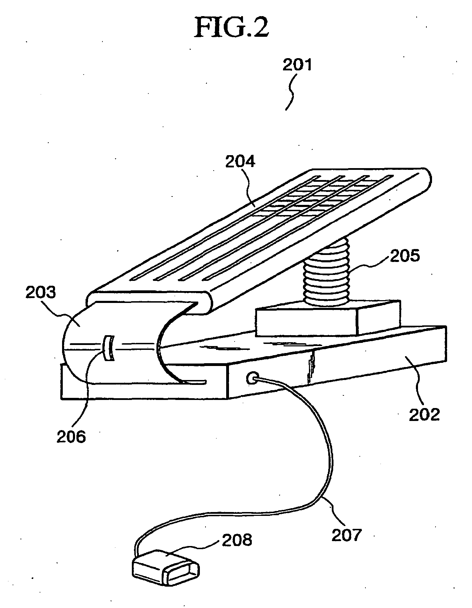

The controller 105 connected via the interface 104 receives an operation input that is performed when a user executes the game. Moreover, the brake-type controller can be connected to the interface 104. FIG. 2 is a schematic view illustrating one general configuration of the embodiment of such a brake-type controller. The following explanation will be given with reference to this figure.

A brake-type controller 201 according to the present embodiment can be broadly divided into the respective sections of a base section 202, a plate spring section 203, a pedal section 204 and a pressing section 205.

The base section 202 is a portion to be used as a base when the brake-type controller 201 is installed on a floor. The plate spring section 203 is placed at one end side of the base section 202, and the pressing section 205 is placed at the other end side thereof. Moreover, since the operation by foot applies a large force as compared with the manual operation in a general case, it is designed to have weight to such a degree that neither overturn nor movement occurs even if it is a little roughly handled by foot. Or, members that stick to the floor such as a sucker and the like are arranged to fix the entire brake-type controller 201 to the floor.

The plate spring section 203 serves as a "hinge-like" function between the pedal section 204 and the base section 202. When no foot operation is executed by the player and no pressure is applied to the pressing section 205, it is desirable that the pedal section 204 has elasticity such that a fixed posture is held. In this case, as the "fixed posture", for example, a posture taken when the player presses the pedal section 204 to the last or a posture taken when the pedal section 204 is farthest from the base section 202 can be considered. In the explanation given below, it is assumed that the latter posture is adopted.

A strain gauge 206 is adhered to the plate spring section 203. The strain gauge 206 is a sensor that detects to what degree the outside of the plate spring section 203 expands or to what degree the inside thereof contracts, and an output of the sensor corresponds to the position (angle or posture) of the pedal section 204.

The pedal section 204 is a member that is used when the player puts his/her foot thereon to press. The pressing section 205 is connected to a lower side of a central point to which force is applied most when the player puts his/her foot thereon. In a case where pressure is not applied to the pressing section 205, when the player presses the pedal section 204 or reduces force, an angle of the pedal section 204 is changed by only elasticity of the plate spring section 203.

When the player presses the pedal section 204 by oil pressure, air pressure and the like, the pressing section 205 gives a repulsive force and the posture of the pedal section 204 stops at a position where pressure caused when the player presses the pedal section 204 balances with pressure caused by the plate spring section 203. In order to return the pedal section 204 from the current posture in such a stopping state (namely, move in a direction where the pedal section 204 separates from the base section 202), the repulsive force designated to the pressing section 205 may be increased. Moreover, in order to cause the player to further press the pedal section 204, the repulsive force designated to the pressing section 205 may be reduced.

Since the pressing section 205 gives the repulsive force by the oil pressure and the air pressure, a fixed correlation relationship is present between the repulsive and the pressure such as the oil pressure and the air pressure. Accordingly, when the pedal section stops, the air pressure and the oil pressure can be used as the pedaling pressure of the pedal section 204.

On the other hand, though the pressing section 205 has a pump built-in to give the oil pressure and air pressure, power supplied to the pump is increased or decreased and the repulsive force to the pedal section 204 is thereby adjusted. Additionally, in order to know the pedaling pressure of the pedal section 204, a pressure sensor may be separately provided to the pressing section 205. However, in general, since a change in pedaling pressure and a change in power supplied to the pressing section 205 reacts with a change in posture of the pedal section 204 at extremely high speed, a value of power supplied to the pump of the pressing section 205 and a value of current may be an approximate value of the pedaling pressure (value corresponding thereto): Power given to the pump may be supplied from the information processing apparatus 100. However, when a large power is needed to drive the pump, a cable for connection to AC power source and a connector (not shown) are prepared separately.

The brake-type controller 201 further includes an interface (not shown since this is built in the base section 202) for connecting to the information processing apparatus 100, a cable 207 connected to the relevant interface, and a connector 208 for connecting to the interface 104 of the information processing apparatus 100. The brake-type controller 201 transmits status information that designates the position (posture, angle) of the current pedal and the pedaling pressure via these, and receives instructing information that designates the repulsive force of the pedal via these.

In addition, since exchanging with data in byte unit or word unit is suitable for communications with the brake-type controller 201, for example, the following value conversion is executed.
(1) An output of the strain gauge is appropriately converted such that a position at which the pedal section 204 is farthest from the base section 202 reaches a value of 0 and a position at which it is closest to the base section 202 reaches a value of 65535, and sends it to the information processing apparatus 100.
(2) A pressure (pedaling pressure) value of the pressing section 205 is appropriately converted such that a case in which no pressure is applied reaches a value of 0 and a case in which pressure is applied reaches a value of 65535, and sends it to the information processing apparatus 100.
(3) The information processing apparatus 100 appropriately converts a value of power to be supplied to the pressing section 205 such that a case in which the pump is not in operation reaches a value of 0 and a case in which the pump is in full operation reaches a value of 65535, and sends it to the brake-type controller.

In addition, the above explained the example in which the pressing section 205 was configured by the oil pressure or the air pressure mechanism using the pump. However, the pressing section 205 may be configured by various kinds of techniques such as one using a motor, a belt driving and the like.

Referring to FIG 1, data indicating the progress of the game is rewritably stored in the external memory 106 connected in a freely attachable and detachable manner via the interface 104. The user executes an instruction input via the controller 105, thereby making it possible to suitably record these data onto the external memory 106.

On the DVD-ROM attached to the DVD-ROM drive 108, a program for executing the game, image data and speech data accompanying the game are recorded. Under control of the CPU 101, the DVD-ROM 108 executes reading processing to the DVD-ROM attached thereto to read necessary programs and data, and temporarily stores them in the RAM 103 and the like.

The image processing section 107 processes data read from the DVD-ROM by an image computation processor (not shown) provided in the CPU 101 or the image processing section 107, and thereafter records it on a frame memory (not shown) provided in the image processing section 107. Image information recorded in the memory frame is converted into a video signal in a predetermined synchronous timing, and output to a monitor (not shown) connected to the image processing section 107. This allows various types of images to be displayed.

The image computation processor executes transparent computations such as two-dimensional image overlapping computation, α blending and the like and various types of saturation computations at high speed. Moreover, it is possible to perform high-speed execution of a computation in which polygon information arranged in a virtual three-dimensional space and having various types of texture information added is rendered by a Z buffering method to obtain a rendering image in which the polygon placed in the virtual three-dimensional space is viewed from a predetermined viewpoint position. Particularly, a function of calculating the degree of which the polygon is illuminated by typical (positive) light sources such as a point source, a parallel light source, a cone light source, and the like is converted in a library form or a hardware form to allow high-speed calculation.

Moreover, the CPU 101 and the image computation processor operate in cooperation with each other, thereby making it possible to draw a character string onto the frame memory as a two-dimensional image according to font information that defines a character shape or draw it onto each polygon surface. Though font information is recorded on the ROM 102, special font information recorded on DVD-ROM can be used.

The NIC 109 is one that connects the information processing apparatus 100 to a computer communication network such as the Internet and the like, and this includes one that complies with 10BASE-T/100BASE-T standard, and an analog modem for connecting to the Internet using a telephone line, an ISDN (Integrated Services Digital Network) modem, an ADSL (Asymmetric Digital Subscriber Line) modem, a cable modem for connecting to the Internet using a cable television line and the like and an interface (not shown) that mediates between these modems and the CPU 101.

A speech processing section 110 converts speech data read from the DVD-ROM into an analog speech signal and outputs it from a speaker (not shown) connected thereto. Moreover, under control of the CPU 101, sound effects and musical composition data that should be produced in the progress of the game are generated and sounds corresponding thereto are output from the speaker. For example, this includes a sound of moving car, a vibration sound, a sound produced when tires are locked, and the like.

In addition, by use of a large capacity external storage device such as a hard disk and the like, the information processing apparatus 100 may be configured to exert the same functions as the ROM 102, the RAM 103, the external memory 106, the DVD-ROM attached to the DVD-ROM drive 108, and the like.

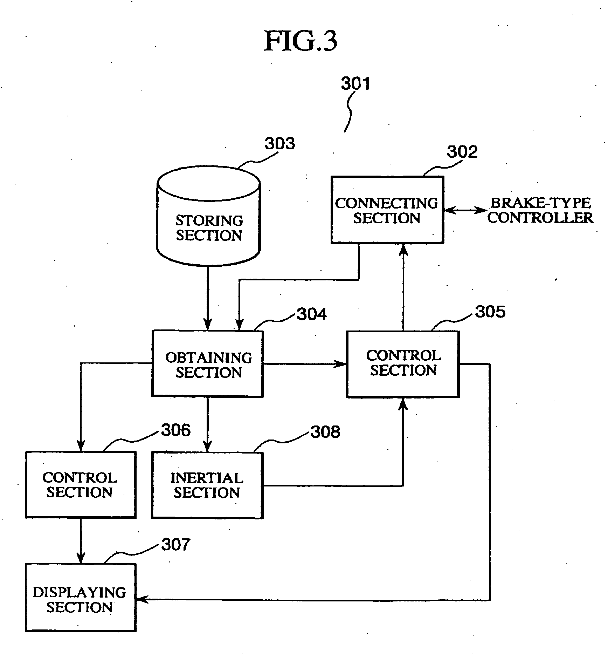

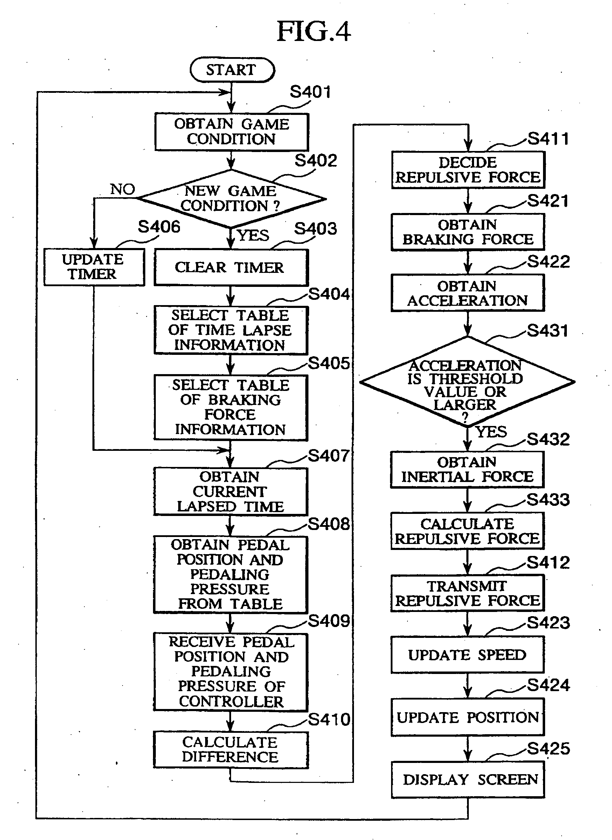

FIG 3 is an explanatory view illustrating a general configuration relating to the function of each section of the game device according to the present embodiment. FIG. 4 is a flowchart illustrating the processing flow of a game method executed by the game device according to the present embodiment. The following will give an explanation with reference to these figures. First of all, a game device 301 of the present embodiment includes a connecting section 302, a storing section 303, an obtaining section 304, a control section 305, a braking section 306, a displaying section 307, and an inertial section 308.

First of all, the connecting section 302 allows communicable connection to "a controller that transmits status information, which designates a current pedal position and pedaling pressure and receives instructing information that designates the repulsive force of the pedal." Namely, since connection to the brake-type controller 201 is made, the interface 109 of the information processing apparatus 100 functions as the connecting section 302.

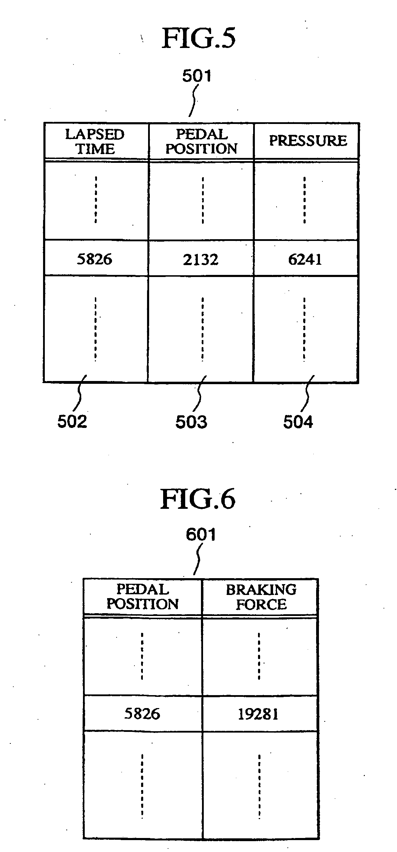

While, the storing section 303 prestores time change information of the pedal position and the pedaling pressure to be associated with the game condition. FIG 5 is a schematic view illustrating the state in which time change information of the pedal position and the pedaling pressure in the condition of a certain game is stored in the storing section 303. The following will give an explanation with reference to this figure.

The storing section 303 records data on "how the user desires to achieve" a change in the pedal position and pedaling pressure of the brake-type controller 201 by an elapse of time every game condition. In each row of a table 501, an elapsed time 502 since the time when an event corresponding to a certain condition started, a pedal position 503 placed when the relevant time passed, and a pedaling pressure 504 are recorded in a table format.

As mentioned above, the pedal position 503 and the pedaling pressure 504 are expressed by two-byte integer values, namely, integer values of 0 to 65535. Moreover, the elapsed time 502 is expressed by a multiple of maximum unit of a predetermined time (for example, interval of a screen update in the game device 301, an interval of a vertical synchronous interrupt of the monitor connected to the information processing apparatus 100, and the like) that is also an integer.

It is desirable that data, which relates to the time when the pedal position 503 and the pedaling pressure 504 rapidly change, be recorded at exact time intervals. For this reason, the elapsed time between a row of data, which corresponds to a case that such a rapid change occurs, and two rows straddling such a data row, is set to be shorter than the elapsed time between a row of data, which corresponds to a case that a gentle change occurs, and two rows straddling such a data row. Accordingly, the use of the technique of a linear interpolation and the like makes it possible to obtain the pedal position and pedaling pressure even in the case of elapsed time that is not stored in the table.

In the storing section 303, such the table 501 of various kinds is stored every game condition. Accordingly, the DVD-ROM attached to the DVD-ROM drive 108, the RAM 103 that stores data read therefrom and the like function as the storing section 303. In addition, the following events can be considered as the game conditions.
(a) Whether ABS (Anti-lock Brake System) operates.
(b) Whether the tires are locked.
(c) Unevenness on the road surface.
(d) A frictional coefficient of the car.
(e) Acceleration of the car
(f) Whether a fade occurs in the brake.
(g) Whether air is entrained in brake fluid.
(h) Play of the pedal every car.
(i) A stroke of pedal every car (maximum pedaling amount)
(j) A coefficient indicating magnitude of the repulsive force.

Though these data refer to data of the car moving in the virtual world, these are formed of data based on data obtained when the similar event occurs in the actual car, thereby making it possible to obtain more real operational feeling of the brake.

Furthermore, the storing section 303 prestores information of "a pedal position and/or a pedaling pressure" and braking force information of braking force obtained at this time to be associated with the game condition. FIG. 6 is an explanatory view illustrating the state of braking force information stored in the storing section 303.

The following will give an explanation with reference to this figure.

The braking force information is stored in a table format as in a table 601 every game condition, similar to the aforementioned time change information. Generally, since a fixed relevance is present between the pedal position and the pedaling pressure, if either a relationship between "pedal position" and "braking force" or a relationship between "pedaling pressure" and "braking force" is considered instead of a relationship between "both the pedal position and the pedaling pressure" and "braking force", approximation with sufficient accuracy can be obtained in many cases. A table with consideration given to the relationship between "both the pedal position and the pedaling pressure" and "braking force" may be, of course, formed to obtain braking force to be described later. As illustrated in FIG. 6, in the present embodiment, the table 601 describes only the relationship between a pedal position 602 and a braking force 603 in each row. In addition, though the pedal position is divided into 65536 stages as mentioned above, the relationship with the braking force may be recorded in connection with all stages, or a suitable value may be selected and stored in the table in an interpolatable form to reduce the amount of data to be held.

Now, referring to FIG. 3 and FIG. 4, in the game device 301 for which such preparations are made, processing after the game method of the present embodiment is started will be explained. First of all, the obtaining section 304 obtains a current game condition (step S401). As the game condition, the aforementioned events can be considered and any one of the tables 501 is selected from the storing section 303.

Then, it is judged whether a new game condition is started (step S402), and when the new game condition is started (step S402; Yes), a timer, which measures the time since the game condition started, is cleared (step S403) and table 501 indicating any one of time lapse information is selected from the storing section 303 based on the game condition obtained in the step S401 (step S404). Similarly, any one of tables 601 indicating braking force information is selected from the storing section 303 (step S405). While, when the conventional game condition is maintained as it is (step S402; No), the timer is updated (step S406) to proceed the elapsed time.

Then, the obtaining section 304 obtains the current elapsed time from the timer (step S407). In addition, regarding the configuration of the timer, in place of the present configuration, various types of known techniques may be applied. For example, a method may be used where an interrupt handler that counts a timer interrupt and the number of vertical synchronous interrupts is prepared, while a variable that holds a count value at the time when the game condition is started is prepared and the value held in the variable is subtracted from the current count value.

Next, the values of the pedal position and pedaling pressure at the current elapsed time are obtained from the selected table 501 (step S408). Accordingly, the CPU 101 functions as the obtaining section 304 in cooperation with the RAM 103. In addition, when the current elapsed time is directly described in the table 501, rows before and after the elapsed time are searched from the table 501 and the pedal position and pedaling pressure are obtained by the method such as linear interpolation and the like.

Next, the control section 305 receives condition information transmitted from the brake-type controller 201 via the connecting section 302 (step S409). In the condition information, the pedal position and pedaling pressure are designated in 65536 stages respectively as mentioned above.

Then, "a difference between the pedal position of the condition information and the obtained pedal position" and "a difference between the pedaling pressure of the condition information and the obtained pedaling pressure" are obtained (step S410), and in order to minimize them as much as possible, a repulsive force to be applied to the brake-type controller 201 is decided (step S411). Though various types of techniques such as a classical control method, an optimal control method based on a modem control theory, and the like can be considered in order to calculate the repulsive force, the following will explain one example.

In the present embodiment, a value to be input to the brake-type controller 201 is power to be supplied to the pump of the pressing section 205. On the other hand, a value output from the brake-type controller 201 is two information items of the pedal position and the pedaling pressure. Then, target values of the pedal position and pedaling pressure are obtained from the table 501.

As mentioned above, in the step S410, a difference between the target value and the actual value in connection with each of the pedal position and the pedaling pressure is obtained. Then, the following numeral values are first obtained.
(a) A sum of the obtained differences each of which is multiplied by a predetermined positive coefficient.
(b) A sum of the obtained differences in which each square value is multiplied by a predetermined positive coefficient. Moreover, a value, which is obtained when either numeral value is multiplied and/or integrated by a positive constant, is used as a feedback value. Then, the feedback value is subtracted from power obtained by repeating the previous processing. This makes it possible to execute proportional control, integral control, or proportional integral control.

Furthermore, the braking section 306 obtains braking force, which is designated to be associated with the current pedal position designated as the condition information received in step S409, from the table 601 of braking force selected in the step S403 (step S421). In this case, similar to the above obtaining section 304, the braking section 306 obtains a value of braking force by the technique such as linear interpolation and the like as required.

Then, acceleration of the car moving on the course in the virtual world is calculated from the braking force (step S422). Though the acceleration of the car is decided by various kinds of parameters such as the current engine state of the car, friction resistance of the road surface, the condition of the road surface, and the like, in the present embodiment, it is assumed that the acceleration of the car is calculated with consideration given to the braking force obtained in step S413 in addition to these parameters. In other words, the CPU 101 functions as the braking section 306 in cooperation with the RAM 103.

Moreover, in the present embodiment, the inertial section 308 judges whether magnitude of the acceleration exceeds a predetermined threshold value (step S431), and in the case of exceeding it (step S431; Yes), the inertial section 308 obtains an inertial force that is preset to be associated with the acceleration (step S432). Though the inertial force may be decided every acceleration and prestored in the storing section 302, this may be used as a fixed value since the purpose liens in transmitting impact to the player in general. Furthermore, this may be set to be proportional to acceleration. Then, the inertial force obtained in the step S432 is added to the repulsive force calculated in the step S411 (step S433). Additionally, the inertial section 308 and steps S431 to S433 may be omitted depending on the embodiment.

Furthermore, power corresponding to the obtained repulsive force is designated as instructing information and transmitted to the brake-type controller 201 via the connecting section 302 (step S412). In this way, the CPU 101 functions as the control section 305 in cooperation with the interface 109 and the brake-controller 201.

Then, the displaying section 307 updates the speed of the car from the calculated acceleration (step S432) and further updates the position of the car (step S424). Since an increase in speed can be obtained if the calculated acceleration is multiplied by time unit and a change in position can be obtained if the calculated speed is multiplied by time unit, an area for storing the position information of the car and the speed information in the RAM 103 is prepared in advance and the value of the area is suitably updated in these steps, so that movement of the car in the virtual world is expressed.

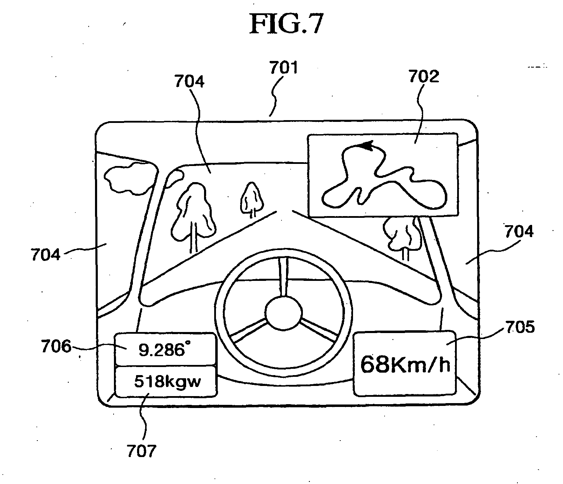

Then, the displaying section 307 displays the current position of the car, the current speed of the car and the current position and braking of the pedal on the screen (step S425), and the processing goes back to the step S401. FIG. 7 is an explanatory view illustrating one example of a screen display of such a racing game. The following explanation will be given with reference to this figure.

On a screen 701, map information 702 indicating the position of the car in the course is displayed to be overlapped with a background 703 showing the state of an outside world 704 seen from a driver's seat of the car. The map information 702 is one that illustrates the shape of the course preset in the virtual world and the position of the car in the course in a two-dimensional manner, and the player can know where the car that he/she drives is present in the course by viewing this.

The background 703 shows the state of an outside world 704 seen from a driver's seat of the car. The outside world 704 is one that is displayed by three-dimensional graphics in which the road of the course of the virtual world and various types of objects arranged therearound are formed by polygons and the polygon group is viewed in a state that the position of the car is used as a point of view and the speed of the car is used as a sight line. Various types of techniques can be applied to image generation by such three-dimensional graphics as mentioned above.

Additionally, a speed meter 705, which indicates the speed of the car, a pedal meter 706, which indicates the current position of the pedal, and a braking force meter 707, which indicates the current magnitude of braking force, are displayed on the screen 701. Regarding these various types of numeral displays, a color, which is different for each range of a predetermined value, is allocated thereto so that each display color may change when the value increases. Moreover, though the numeral display is executed on the screen 701, these information may be provided to the player by a bar graph, a circle graph, and a meter-type graph as used in the actual car.

Moreover, since the driver's point of view and sight line to the car change when the driver presses or leases the brake pedal, such a technique that moves the entire screen display up and down according to the value of the pedal position may be used in place of the pedal meter 706. The position of the point of view in the three-dimensional graphics may be changed, and it is possible to use a method in which at the time of when a screen display is generated in a state the position of the point of view is fixed to a predetermined position in the car and thereafter this is transferred to a frame buffer, a predetermined offset is added and transferred based on the value of the pedal position, thereby expressing up and down movement.

In this way, according to the present embodiment, it is assumed that the repulsive force of the pedal is controlled using the brake-type controller based on information of the pedal position and the pedaling pressure to be transmitted from now on, thereby making it possible to give the player such a feeling as if the player drove the actual car.

### Industrial Applicability

As explained above, according to the present invention, the present invention can provide a game device that uses information of a pedal position and a pedaling pressure to control the repulsive force, a game method, a program that causes a computer to execute these, and a computer-readable information recording medium recording the program.

## Claims

1. A game device that comprises a connecting section, a storing section, an obtaining section, and a control section,
said connecting section that allows communicable connection to "a controller that transmits status information designating a current pedal position and pedaling pressure and receives instructing information";
said storing section that prestores time change information of the pedal position and the pedaling pressure to be associated with a game condition;
said obtaining section that obtains the prestored time change information to be associated with a current game condition; and
said control section that generates instructing information from the pedal position and pedaling pressure designated as the obtained time change information and the current pedal position and pedaling pressure designated as the status information received from the controller to be connected, and transmits the instructing information to the controller via said connecting section.

2. The game device according to claim 1, wherein said control section calculates force to be provided to a pedal to reduce a difference between each of the pedal position and pedaling pressure designated as the obtained time change information and each of the current pedal position and pedaling pressure designated as the status information received from the controller to be connected, and transmits instructing information that designates the calculated force as a repulsive force of the pedal to the controller via said connecting section.

3. The game device according to claim 2, further comprising a braking section and a displaying section, wherein said storing section prestores "a pedal position and/or a pedaling pressure" and braking force information of braking force at this time to be associated with the game condition, said obtaining section further obtains the braking force information prestored to be associated with the current game condition, said braking section obtains braking force designated to be associated with the current pedal position and/or pedaling force designated as the status information from the obtained braking force information, and calculates acceleration of an object moving in a virtual world from the braking force, and said displaying section moves the object in the virtual world by the calculated acceleration, and displays the object on the screen by the moved position.

4. The game device according to claim 3, wherein said displaying section displays the virtual world where the position of the moved object is used as a point of view.

5. The game device according to claim 4, wherein said displaying section moves the position of the point of view up and down according to the current pedal position designated as the status information and displays the virtual world on the screen.

6. The game device according to claim 3 or 4, further comprising an inertial section, wherein said inertial section obtains an inertial force preset to be associated with the acceleration when magnitude of the calculated acceleration exceeds a predetermined threshold value, and said control section designates a sum of the calculated force and the obtained inertial force as a repulsive force of the pedal when the inertial force is obtained.

7. A game method that comprises a receiving step, an obtaining step, a controlling step, and a transmitting step to perform communication with a controller,
the receiving step of receiving status information transmitted from the controller to designate a current pedal position and pedaling pressure;
the obtaining step of obtaining time change information prestored to be associated with a current game condition and to designate the pedal position and the pedaling pressure;
the controlling step of generating instructing information from the pedal position and pedaling pressure designated as the obtained time change information and the current pedal position and pedaling pressure designated as the status information received from the controller; and
the transmitting step of transmitting the generated instructing information to the controller.

8. The game method according to claim 7, wherein in the controlling step, force is calculated to reduce a difference between each of the pedal position and pedaling pressure designated as the obtained time change information and each of the current pedal position and pedaling pressure designated as the status information received from the controller to be connected, and instructing information that designates the calculated force as a repulsive force of the pedal is generated.

9. A program causing a computer having a connecting section that allows communicable connection to "a controller that transmits status information designating a current pedal position and pedaling pressure and receives instructing information" to function as a connecting section, a storing section, an obtaining section, and a control section,
said program causing the computer to execute the function of:
prestoring time change information of the pedal position and the pedaling pressure to be associated with a game condition by said storing section;
obtaining the prestored time change information to be associated with a current game condition by said obtaining section; and
generating instructing information from the pedal position and pedaling pressure designated as the obtained time change information and the current pedal position and pedaling pressure designated as the status information received from the controller to be connected to transmit the instructing information to the controller via said connecting section by said control section.

10. The program according to claim 9, wherein said program causes the computer to execute such a function that said control section calculates force to be provided to the pedal to reduce a difference between each of the pedal position and pedaling pressure designated as the obtained time change information and each of the current pedal position and pedaling pressure designated as the status information received from the controller to be connected, and transmits instructing information that designates the calculated force as a repulsive force of the pedal via said connecting section.

11. A computer-readable information recording medium having a program recorded therein, the program causing a computer having a connecting section that allows communicable connection to "a controller that transmits status information designating a current pedal position and pedaling pressure and receives instructing information" to function as a connecting section, a storing section, an obtaining section, and a control section,
said program causing the computer to execute the function of:
prestoring time change information of the pedal position and the pedaling pressure to be associated with a game condition by said storing section;
obtaining the prestored time change information to be associated with a current game condition by said obtaining section; and
generating instructing information from the pedal position and pedaling pressure designated as the obtained time change information and the current pedal position and pedaling pressure designated as the status information received from the controller to be connected to transmit the instructing information to the controller via said connecting section by said control section.

12. The computer-readable information recording medium according to claim 11, wherein said program causes the computer to execute such a function that said control section calculates force to be provided to the pedal to reduce a difference between each of the pedal position and pedaling pressure designated as the obtained time change information and each of the current pedal position and pedaling pressure designated as the status information received from the controller to be connected, and transmits instructing information that designates the calculated force as a repulsive force of the pedal via said connecting section.

## Patentansprüche

1. Spielvorrichtung, die einen Verbindungsabschnitt, einen Speicherabschnitt, einen Erhalt-Abschnitt und einen Steuerabschnitt aufweist,
wobei der Verbindungsabschnitt eine kommunikationsfähige Verbindung mit "einer Steuerung, die Statusinformationen, die eine momentane Pedalposition und einen momentanen Pedaldruck kennzeichnen, sendet und Befehlsinformationen empfängt," ermöglicht;
wobei der Speicherabschnitt zeitliche Änderungsinformationen in Bezug auf die Pedalposition und den Pedaldruck, die einem Spielzustand zuzuordnen sind, im Voraus speichert;
wobei der Erhalt-Abschnitt die vorgespeicherten zeitlichen Änderungsinformationen erhält, die einem momentanen Spielzustand zugeordnet werden sollen; und
wobei der Steuerabschnitt anhand der Pedalposition und des Pedaldrucks, die als die erhaltenen zeitlichen Änderungsinformationen bestimmt sind, und der momentanen Pedalposition und des momentanen Pedaldrucks, die als die von der zu verbindenden Steuerung empfangenen Statusinformationen bestimmt sind, Befehlsinformationen erzeugt und die Befehlsinformationen an die Steuerung über den Verbindungsabschnitt sendet.

2. Spielvorrichtung nach Anspruch 1, wobei der Steuerabschnitt eine Kraft berechnet, die einem Pedal zuzuführen ist, um eine Differenz zwischen jeweils der Pedalposition bzw. dem Pedaldruck, die als die erhaltenen zeitlichen Änderungsinformationen bestimmt sind, und jeweils der momentanen Pedalposition bzw. dem momentanen Pedaldruck, die als die Statusinformationen, die von der zu verbindenden Steuerung empfangen werden, bestimmt sind, zu reduzieren, und Befehlsinformationen, die die berechnete Kraft als eine Rückstoßkraft des Pedals kennzeichnen, an die Steuerung über den Verbindungsabschnitt sendet.

3. Spielvorrichtung nach Anspruch 2, die ferner einen Bremsabschnitt und einen Anzeigeabschnitt aufweist, wobei der Speicherabschnitt "eine Pedalposition- und/oder eine Pedaldruck-" und Bremskraft-Information in Bezug auf die Bremskraft zu diesem Zeitpunkt, der dem Spielzustand zuzuordnen ist, im Voraus speichert, wobei der Erhalt-Abschnitt ferner die vorgespeicherte Bremskraftinformation erhält, die dem momentanen Spielzustand zugeordnet werden soll, wobei der Bremsabschnitt aus der erhaltenen Bremskraftinformation eine Bremskraft erhält, die bestimmt ist, um der momentanen Pedalposition und/oder Pedalkraft, die als die Statusinformationen bestimmt sind, zugeordnet zu werden, und eine Beschleunigung eines Objektes, das sich in einer virtuellen Welt bewegt, aus der Bremskraft berechnet, und wobei der Anzeigeabschnitt das Objekt in der virtuellen Welt anhand der berechneten Beschleunigung bewegt und das Objekt anhand der bewegten Position auf dem Schirm anzeigt.

4. Spielvorrichtung nach Anspruch 3, wobei der Anzeigeabschnitt die virtuelle Welt anzeigt, wobei die Position des bewegten Objektes als ein Betrachtungspunkt verwendet wird.

5. Spielvorrichtung nach Anspruch 4, wobei der Anzeigeabschnitt die Position des Betrachtungspunktes gemäß der momentanen Pedalposition, die als die Statusinformation bestimmt ist, nach oben und nach unten bewegt und die virtuelle Welt auf dem Schirm anzeigt.

6. Spielvorrichtung nach Anspruch 3 oder 4, die ferner einen Trägheitsabschnitt aufweist, wobei der Trägheitsabschnitt eine Trägheitskraft erhält, die im Voraus festgelegt ist, um der Beschleunigung zugeordnet zu werden, wenn die Größe der berechneten Beschleunigung einen vorbestimmten Schwellenwert überschreitet, und wobei der Steuerabschnitt eine Summe aus der berechneten Kraft und der erhaltenen Trägheitskraft als eine Rückstoßkraft des Pedals bestimmt, wenn die Trägheitskraft erhalten wird.

7. Spielverfahren, das einen Empfangsschritt, einen Erhalt-Schritt, einen Steuerschritt und einen Sendeschritt aufweist, um eine Kommunikation mit einer Steuerung zu bewerkstelligen, mit
dem Empfangsschritt zum Empfangen von Statusinformationen, die von der Steuerung übermittelt werden, um eine momentane Pedalposition und einen momentanen Pedaldruck zu kennzeichnen;
dem Erhalt-Schritt zum Erhalt zeitlicher Änderungsinformationen, die im Voraus gespeichert sind, um einem momentanen Spielzustand zugeordnet zu werden und um die Pedalposition und den Pedaldruck zu kennzeichnen;
dem Steuerungsschritt zur Erzeugung von Befehlsinformationen anhand der Pedalposition und des Pedaldrucks, die als die erhaltenen zeitlichen Änderungsinformationen bestimmt sind, und der momentanen Pedalposition und des momentanen Pedaldruck, die als die von der Steuerung empfangenen Statusinformationen bestimmt sind; und
dem Sendeschritt zum Senden der erzeugten Befehlsinformationen zu der Steuerung.

8. Spielverfahren nach Anspruch 7, wobei in dem Steuerungsschritt eine Kraft berechnet wird, um eine Differenz zwischen jeweils der Pedalposition bzw. dem Pedaldruck, die als die erhaltenen zeitlichen Änderungsinformationen bestimmt sind, und jeweils der momentanen Pedalposition bzw. dem momentanen Pedaldruck, die als die Statusinformationen, die von der zu verbindenden Steuerung empfangen werden, bestimmt sind, zu reduzieren, und Befehlsinformationen, die die berechnete Kraft als eine Rückstoßkraft des Pedals kennzeichnen, erzeugt werden.

9. Programm, das einen Computer mit einem Verbindungsabschnitt, der eine kommunikationsfähige Verbindung mit "einer Steuerung, die Statusinformationen, die eine momentane Pedalposition und einen momentanen Pedaldruck kennzeichnen, sendet und Befehlsinformationen empfängt," ermöglicht, veranlasst, als ein Verbindungsabschnitt, ein Speicherabschnitt, ein Erhalt-Abschnitt und ein Steuerabschnitt zu wirken,
wobei das Programm den Computer veranlasst, die Funktion auszuführen:
Vorspeichern zeitlicher Änderungsinformationen in Bezug auf die Pedalposition und den Pedaldruck, die einem Spielzustand zuzuordnen sind, durch den Speicherabschnitt;
Erhalt der vorgespeicherten zeitlichen Änderungsinformationen, die einem momentanen Spielzustand zugeordnet werden sollen, durch den Erhalt-Abschnitt; und
Erzeugen von Befehlsinformationen anhand der Pedalposition und des Pedaldrucks, die als die erhaltenen zeitlichen Änderungsinformationen bestimmt sind, und der momentanen Pedalposition und des momentanen Pedaldrucks, die als die Statusinformationen, die von der zu verbindenden Steuerung empfangen werden, bestimmt sind, um die Befehlsinformationen an die Steuerung über den Verbindungsabschnitt zu senden, durch den Steuerabschnitt.

10. Programm nach Anspruch 9, wobei das Programm den Computer veranlasst, eine derartige Funktion auszuführen, dass der Steuerabschnitt eine Kraft berechnet, die einem Pedal zuzuführen ist, um eine Differenz zwischen jeweils der Pedalposition bzw. dem Pedaldruck, die als die erhaltenen zeitlichen Änderungsinformationen bestimmt sind, und jeweils der momentanen Pedalposition bzw. dem momentanen Pedaldruck, die als die Statusinformationen, die von der zu verbindenden Steuerung empfangen werden, bestimmt sind, zu reduzieren, und Befehlsinformationen, die die berechnete Kraft als eine Rückstoßkraft des Pedals kennzeichnen, über den Verbindungsabschnitt sendet.

11. Computer lesbares Informationsaufzeichnungsmedium, auf dem ein Programm aufgezeichnet ist, wobei das Programm einen Computer mit einem Verbindungsabschnitt, der eine kommunikationsfähige Verbindung mit "einer Steuerung, die Statusinformationen, die eine momentane Pedalposition und einen momentanen Pedaldruck kennzeichnen, sendet und Befehlsinformationen empfängt," ermöglicht, veranlasst, als ein Verbindungsabschnitt, ein Speicherabschnitt, ein Erhalt-Abschnitt und ein Steuerabschnitt zu funktionieren,
wobei das Programm den Computer veranlasst, die Funktion auszuführen:
Vorspeichern zeitlicher Änderungsinformationen in Bezug auf die Pedalposition und den Pedaldruck, die einem Spielzustand zuzuordnen sind, durch den Speicherabschnitt;
Erhalt der vorgespeicherten zeitlichen Änderungsinformationen, die einem momentanen Spielzustand zuzuordnen sind, durch den Erhalt-Abschnitt; und
Erzeugen von Befehlsinformationen anhand der Pedalposition und des Pedaldrucks, die als die erhaltenen zeitlichen Änderungsinformationen bestimmt sind, sowie der momentanen Pedalposition und des momentanen Pedaldrucks, die als die Statusinformationen, die von der zu verbindenden Steuerung empfangen werden, bestimmt sind, um die Befehlsinformationen an die Steuerung über den Verbindungsabschnitt zu senden, durch den Steuerabschnitt.

12. Computer lesbares Informationsaufzeichnungsmedium nach Anspruch 11, wobei das Programm den Computer veranlasst, eine derartige Funktion auszuführen, dass der Steuerabschnitt eine Kraft berechnet, die dem Pedal zuzuführen ist, um eine Differenz zwischen jeweils der Pedalposition bzw. dem Pedaldruck, die als die erhaltenen zeitlichen Änderungsinformationen bestimmt sind, und jeweils der momentanen Pedalposition bzw. dem momentanen Pedaldruck, die als die Statusinformationen, die von der zu verbindenden Steuerung empfangen werden, bestimmt sind, zu reduzieren, und Befehlsinformationen, die die berechnete Kraft als eine Rückstoßkraft des Pedals kennzeichnen, über den Verbindungsabschnitt sendet.

## Revendications

1. Dispositif de jeu comprenant une section de connexion, une section de stockage, une section d'obtention et une section de commande,
ladite section de connexion permettant une connexion de communication à un "contrôleur qui envoie des informations d'état désignant une position de pédale et une pression de pédale courantes et reçoit des informations d'instruction";
ladite section de stockage stockant préalablement des informations de variation temporelle de la position de pédale et de la pression de pédale à associer à une condition de jeu;
ladite section d'obtention obtenant les informations de variation temporelle préalablement stockées à associer à une condition de jeu courante; et
ladite section de commande générant des informations d'instruction à partir de la position de pédale et de la pression de pédale désignées en tant qu'informations de variation temporelle et de la position de pédale et de la pression de pédale courantes désignées en tant qu'informations d'état reçues en provenance du contrôleur connecté, et transmettant les informations d'instruction au contrôleur par l'intermédiaire de ladite section de connexion.

2. Dispositif de jeu selon la revendication 1, dans lequel ladite section de commande calcule une force devant être appliquée à une pédale pour réduire une différence entre chacune de la position de pédale et de la pression de pédale désignées en tant qu'informations de variation temporelle obtenues et chacune de la position de pédale et de la pression de pédale courantes désignées en tant qu'informations d'état reçues en provenance du contrôleur connecté, et transmet des informations d'instruction qui désignent la force calculée en tant que force de répulsion de la pédale au contrôleur par l'intermédiaire de ladite section de connexion.

3. Dispositif de jeu selon la revendication 2, comprenant en outre une section de freinage et une section d'affichage, dans lequel ladite section de stockage stocke préalablement une "position de pédale et/ou une pression de pédale" et des informations de force de freinage d'une force de freinage à cet instant à associer à la condition de jeu, ladite section d'obtention obtient en outre les informations de force de freinage préalablement stockées à associer à la condition de jeu courante, ladite section de freinage obtient une force de freinage désignée à associer à la position de pédale et/ou la force de pédale courantes désignées en tant qu'informations d'état à partir des informations de force de freinage obtenues, et calcule une accélération d'un objet se déplaçant dans un monde virtuel à partir de la force de freinage, et ladite section d'affichage déplace l'objet dans le monde virtuel selon l'accélération calculée, et affiche l'objet sur l'écran selon la position déplacée.

4. Dispositif de jeu selon la revendication 3, dans lequel ladite section d'affichage affiche le monde virtuel dans lequel la position de l'objet déplacé est utilisée en tant que point de vue.

5. Dispositif de jeu selon la revendication 4, dans lequel ladite section d'affichage déplace la position du point de vue vers le haut et vers le bas selon la position de pédale courante désignée en tant qu'informations d'état et affiche le monde virtuel sur l'écran.

6. Dispositif de jeu selon la revendication 3 ou 4, comprenant en outre une section inertielle, dans lequel ladite section inertielle obtient une force d'inertie prédéfinie à associer à l'accélération lorsque l'amplitude de l'accélération calculée dépasse une valeur de seuil prédéterminée, et ladite section de commande désigne une somme de la force calculée et de la force d'inertie obtenue en tant que force de répulsion de la pédale lorsque la force d'inertie est obtenue.

7. Procédé de jeu comprenant une étape de réception, une étape d'obtention, une étape de commande et une étape de transmission pour effectuer une communication avec un contrôleur,
l'étape de réception consistant à recevoir des informations d'état envoyées par le contrôleur qui désignent une position de pédale et une pression de pédale courantes;
l'étape d'obtention consistant à obtenir des informations de variation temporelle préalablement stockées à associer à une condition de jeu courante et qui désignent la position de pédale et la pression de pédale;
l'étape de commande consistant à générer des informations d'instruction à partir de la position de pédale et de la pression de pédale désignées en tant qu'informations de variation temporelle obtenues et de la position de pédale et de la pression de pédale courantes désignées en tant qu'informations d'état reçues en provenance du contrôleur; et
l'étape de transmission consistant à transmettre les informations d'instruction générées au contrôleur.

8. Procédé de jeu selon la revendication 7, dans lequel à l'étape de commande, une force est calculée pour réduire une différence entre chacune de la position de pédale et de la pression de pédale désignées en tant qu'informations de variation temporelle obtenues et chacune de la position de pédale et de la pression de pédale courantes désignées en tant qu'informations d'état reçues en provenance du contrôleur connecté, et des informations d'instruction qui désignent la force calculée en tant que force de répulsion de la pédale sont générées.

9. Programme amenant un ordinateur, ayant une section de connexion qui permet une connexion de communication à un "contrôleur qui envoie des informations d'état désignant une position de pédale et une pression de pédale courantes et reçoit des informations d'instruction", à fonctionner comme une section de connexion, une section de stockage, une section d'obtention et une section de commande,
ledit programme amenant l'ordinateur à exécuter les fonctions consistant à:
stocker préalablement des informations de variation temporelle de la position de pédale et de la pression de pédale à associer à une condition de jeu par ladite section de stockage;
obtenir les informations de variation temporelle préalablement stockées à associer à une condition de jeu courante par ladite section d'obtention; et
générer des informations d'instruction à partir de la position de pédale et de la pression de pédale désignées en tant qu'informations de variation temporelle et de la position de pédale et de la pression de pédale courantes désignées en tant qu'informations d'état reçues en provenance du contrôleur connecté afin de transmettre les informations d'instruction au contrôleur par l'intermédiaire de ladite section de connexion par ladite section de commande.

10. Programme selon la revendication 9, dans lequel ledit programme amène l'ordinateur à exécuter une fonction telle que ladite section de commande calcule une force devant être appliquée à la pédale pour réduire une différence entre chacune de la position de pédale et de la pression de pédale désignées en tant qu'informations de variation temporelle obtenues et chacune de la position de pédale et de la pression de pédale courantes désignées en tant qu'informations d'état reçues en provenance du contrôleur connecté, et transmet des informations d'instruction qui désignent la force calculée en tant que force de répulsion de la pédale par l'intermédiaire de ladite section de connexion.

11. Support d'enregistrement d'informations lisible par ordinateur ayant un programme enregistré sur lui, le programme amenant un ordinateur, ayant une section de connexion qui permet une connexion de communication à un "contrôleur qui envoie des informations d'état désignant une position de pédale et une pression de pédale courantes et reçoit des informations d'instruction", à fonctionner comme une section de connexion, une section de stockage, une section d'obtention et une section de commande,
ledit programme amenant l'ordinateur à exécuter les fonctions consistant à:
stocker préalablement des informations de variation temporelle de la position de pédale et de la pression de pédale à associer à une condition de jeu par ladite section de stockage;
obtenir les informations de variation temporelle préalablement stockées à associer à une condition de jeu courante par ladite section d'obtention; et
générer des informations d'instruction à partir de la position de pédale et de la pression de pédale désignées en tant qu'informations de variation temporelle et de la position de pédale et de la pression de pédale courantes désignées en tant qu'informations d'état reçues en provenance du contrôleur connecté afin de transmettre les informations d'instruction au contrôleur par l'intermédiaire de ladite section de connexion par ladite section de commande.

12. Support d'enregistrement d'informations lisible par ordinateur selon la revendication 11, dans lequel ledit programme amène l'ordinateur à exécuter une fonction telle que ladite section de commande calcule une force devant être appliquée à la pédale pour réduire une différence entre chacune de la position de pédale et de la pression de pédale désignées en tant qu'informations de variation temporelle obtenues et chacune de la position de pédale et de la pression de pédale courantes désignées en tant qu'informations d'état reçues en provenance du contrôleur connecté, et transmet des informations d'instruction qui désignent la force calculée en tant que force de répulsion de la pédale par l'intermédiaire de ladite section de connexion.
